# EUROPÄISCHE PATENTANMELDUNG

(11) **EP 3 118 450 A1**
(43) Veröffentlichungstag der Anmeldung: **18.01.2017**
(21) Anmeldenummer: 16179322.9
(22) Anmeldetag: 13.07.2016
(51) Int. Cl.: F03D 7/02, F03D 7/06

(54) **WINDKRAFTANLAGE MIT SICHERHEITSTEUERUNG FÜR STARKWIND**

(30) Priorität: 17.07.2015 DE 102015111695
(71) Anmelder: Turbina Energy AG, 82008 Unterhaching (DE)
(72) Erfinder: Gómez Hernández, Víctor, 82008 Unterhaching (DE); Mayer, Maximilian, 82319 Starnberg (DE); Meingassner, Martin, 6323 Bad Häring (AT); Schiegl, Andreas, 82041 Oberhaching (DE)
(74) Vertreter: Strehl Schübel-Hopf & Partner

(57) **Zusammenfassung**

Die vorliegende Erfindung betrifft ein Sicherheitskonzept für Windkraftanlagen mit vertikaler Drehachse 10. Erreicht eine mit der Windgeschwindigkeit korrelierende Regelgröße einen bestimmten oberen Grenzwert, so wird die Anlage in einen Notbetriebszustand geschaltet, bei dem sich der Turbinenrotor 20 und der Rotor 41 des Generators 40 im Leerlauf drehen. Die Anlage ist stabil genug ausgelegt, um auch hohe Windkräfte und daraus resultierende hohe Drehzahlen des frei laufenden Turbinenrotors 20 bzw. Generator-Rotors 41 unbeschadet zu überstehen. Sinkt die Regelgröße wieder unter einen vorgegebenen unteren Grenzwert, so wird die Anlage zurück in den normalen Betriebszustand geschaltet.

## Beschreibung

Ein generelles Problem von Windkraftanlagen besteht darin, dass sie bei zu starkem Wind (Windgeschwindigkeiten von mehr als 15 bis 20 m/s) vor Beschädigungen geschützt werden müssen. Zum einen muss die Windturbine, insbesondere deren Rotorflügel, stabil genug sein, um starken Winden standzuhalten, zum anderen muss die Leistungsfähigkeit des zur Energiegewinnung an die Turbine angeschlossenen Generators ausreichen, um eine Beschädigung des Generators zu vermeiden.

Im Stand der Technik sind verschiedene Sicherheitskonzepte zum Schutz der Windkraftanlagen gegen Starkwinde bekannt. Diese sind generell für Kleinwindkraftanlagen mit vertikal orientierter Drehachse als auch für solche mit horizontal orientierter Drehachse anwendbar.

Beispielsweise ist es möglich, die Rotorflügel elektrisch, mechanisch oder hydraulisch über eine sogenannte Pitch-Regelung aus dem Wind zu drehen. Dies ist jedoch konstruktiv aufwändig. Außerdem ist die zugehörige Regelung relativ kompliziert und die erforderlich Mechanik, Elektrik bzw. Hydraulik fehleranfällig. Dies gilt auch dann, wenn der komplette Turbinenkopf aus dem Wind gedreht bzw. weggekippt werden soll. Eine besondere Schwierigkeit besteht auch darin, dass eine Rückkehr der Windkraftanlage in den normalen Betriebsmodus bei Abschwächung des Windes dann nur unter großem Aufwand und oft nicht selbsttätig möglich ist.

Eine andere bekannte Sicherungsmöglichkeit sieht vor, die Turbinen-Rotoren bereits im Vorfeld einer angekündigten Starkwindphase mechanisch am Stator bzw. Gehäuse der Windkraftanlage zu fixieren. Dies muss aber immer vorausschauend anhand des Wetterberichts und in der Regel manuell erfolgen.

Statt der mechanischen Fixierung ist auch ein Abbremsen des Turbinenrotors bekannt. Dies kann durch mechanische Bremsblöcke gelingen, die aber relativ aufwändig und teuer sind und außerdem bei länger anhaltendem Starkwind zur Überhitzung neigen. Alternativ kann das Abbremsen auch über einen elektrischen Bremswiderstand erfolgen, einer sogenannten "dump load". Bei dieser Konfiguration wird die vom Windgenerator erzeugte Energie über einen elektrischen Widerstand thermisch verwertet und der Rotor dadurch abgebremst. Nachteilig an dieser Variante ist ihre ineffiziente Betriebsweise und ihre Störungsanfälligkeit aufgrund der hohen Belastung der elektrischen Komponenten des Generators und der nachgeschalteten Leistungsabnahmeeinrichtung.

Eine weitere bekannte Möglichkeit zum elektrischen Abbremsen des Turbinenrotors besteht darin, den Generator elektrisch kurzzuschließen. Die in den Wicklungen des Generators induzierten Ströme sind dann aufgrund der Lenz'schen Regel entgegengesetzt zu den drehungsunabhängigen Magnetfeldern des Generators, so dass der Rotor elektromagnetisch abgebremst wird. Man spricht davon, dass der Generator "verblockt". Problematisch an dieser Lösung ist, dass der Generator nicht bis zu beliebig hohen Drehmomenten kurzschlussfest sein kann. Bei sehr hohen Windgeschwindigkeiten und daraus resultierenden Drehmomenten an den Turbinenrotoren reicht die durch den Kurzschluss erzeugte elektromagnetische Bremskraft unter Umständen nicht mehr aus, so dass der Generator "ausbricht". Das bringt die Gefahr einer Beschädigung bzw. Zerstörung des Generators durch Überhitzung bei länger anhaltenden Starkwindphasen mit sich. Das abrupte Abbremsen des Generators durch den instantan geschalteten Kurzschluss führt außerdem zu hohen mechanischen Belastungen des Rotors an sich und kann die Lebensdauer der Windkraftanlage beeinträchtigen. Schließlich ist es bei einem verblockten Generator schwierig, den optimalen Zeitpunkt zum automatischen Lösen der Kurzschlussschaltung und Zurückkehren in den Normalmodus zu finden. Weil der Generatorenrotor gebremst ist und somit keine leichte Bestimmung einer Regelgröße zur aktuellen Windgeschwindigkeit zulässt, wird die Windkraftanlage meist nach einer vorbestimmten Wartezeit unabhängig von der Windstärke wieder in den Normalzustand versetzt. Dabei kann es je nach Dauer der Starkwindphase vorkommen, dass die Anlage relativ lange trotz geeigneter Windverhältnisse ungenutzt geblieben ist oder umgekehrt nach dem Anschalten gleich wieder abgeschaltet werden muss.

US 2003/0057703 A1 offenbart ein allgemeines Steuerverfahren, bei dem auf einer gemeinsamen Welle gelagerte Motoren oder Generatoren abhängig von Kenngrößen wie dem Drehmoment oder der Drehzahl zugeschaltet oder abgeschaltet werden können. Falls die Windgeschwindigkeit größer wird als ein Wert, bis zu dem die Windkraftanlage ausgelegt ist, werden alle Generatoren abgeschaltet und die Rotation der Rotorflügel mechanisch angehalten.

WO 2004/057182 A1 beschreibt eine Windkraftanlage mit horizontal orientierter Drehachse, bei der zur Vermeidung von Eisbildung auf den Rotorflügeln der Generator während einer Schwachwindphase als Motor betrieben wird, um die Turbine in Bewegung zu halten.

Aufgabe der vorliegenden Erfindung ist es, die oben genannten Nachteile der derzeit eingesetzten Sicherheitskonzepte zu vermeiden, und eine Steuerung bereit zu stellen, mit der sich die Windkraftanlage zuverlässig und sicher gegen starke Winde schützen und nach Beendigung der Starkwindphase auch automatisch wieder in den normalen Betriebsmodus zurückschalten lässt.

Die Aufgabe wird durch die im Anspruch 1 definierte Windkraftanlage und das im Anspruch 10 definierte Steuerverfahren gelöst. Die Unteransprüche betreffen bevorzugte Ausführungsbeispiele.

Kernidee der vorliegenden Erfindung ist es, den Generator bei Starkwind in einen Leerlaufmodus zu schalten, bei dem er keine elektrische Energie an die Leistungsabnahmeeinrichtung (beispielsweise einen Wechselrichter für die Netzeinspeisung, einen Laderegler für die Batterieeinspeisung oder eine sonstige elektrische Last) liefert. Damit entfallen das im Stand der Technik vorherrschende Abbremsen des Turbinenrotors und die damit verbundenen Nachteile komplett. Gerade bei Windkraftanlagen mit vertikaler Drehachse bewirkt das schnelle Rotieren der Turbinenrotorblätter ferner, dass sich die Turbine wie ein Kreisel selbst stabilisiert und somit dem Wind besser standhalten kann. Auch ein Zurückschalten der Windkraftanlage in den normalen Betriebszustand ist ohne erhöhten Aufwand und automatisch möglich, weil die freie Drehung des Rotors (über dessen Drehzahl oder über die Generatorleerlaufspannung) dazu benutzt werden kann, ein Abklingen des Windes sensorisch festzustellen.

Wichtig und vorteilhaft für diese erfindungsgemäße Lösung ist ein stabiler Aufbau der Windturbine und eine entsprechende Auslegung des Generators. Bevorzugt ist dabei eine vertikale Windkraftanlage, bei der der Turbinenrotor innen liegt und die Statorblätter den Außenumfang bilden. Als besonders geeignet haben sich die in den deutschen Patentanmeldungen 10 2014 115 927.6 und 10 2014 115 001.5 im Detail beschriebenen Windkraftanlagen der Turbina Energy AG erwiesen. Bei diesen sind die Statorblätter über entsprechende Statorblatthalter direkt am Generatorgehäuse befestigt bzw. wesentliche Elemente des Stators und/oder Rotors insgesamt aus kreissymmetrischen Segmentbauteilen zusammengesetzt. Darüber hinaus hat es sich als konstruktiv stabilisierende Maßnahme bewährt, die Rotorflügel nicht über Rotorarme an der vertikalen Drehachse zu befestigen, sondern nur an zwei Stirnplatten am oberen und unteren Ende der Turbine. Mit einer derartigen Windkraftanlage haben Tests im Windkanal einen störungsfreien Betrieb im Generatorleerlauf bei Windgeschwindigkeiten von 50 m/s und darüber erwiesen. Bei einer Windgeschwindigkeit von ca. 40 m/s wurde bei diesen Tests bspw. eine Rotor-Drehzahl von ca. 500 U/min gemessen.

Die Steuerung des Betriebszustands der Windkraftanlage erfolgt vorzugsweise anhand einer Regelgröße, die aus der am Generator erzeugten Ausgabespannung (sei es unter Last oder im Leerlauf), der Drehzahl des Turbinenrotors bzw. Generatorenrotors (sei es unter Last oder im Leerlauf) und/oder der von einem externen Sensor gemessenen Windgeschwindigkeit gebildet wird. Die ersten zwei genannten Signalgrößen sind systeminterne Kenngrößen; die dritte genannte Signalgröße ist eine externe Kenngröße. Grundsätzlich sind aber alle Arten von Signalgrößen denkbar, die den Betriebszustand der Windkraftanlage auch im Leerlauf abbilden. Vorzugsweise wird als Regelgröße allein die Generatorspannung verwendet.

Erreicht die (erste) Regelgröße einen bestimmten vorher festgelegten oberen Grenzwert, so muss von einem überaus starken Windaufkommen ausgegangen werden, so dass die Anlage gegen Beschädigungen gesichert werden muss. Dann schaltet die erfindungsgemäße Steuerung die Windkraftanlage in einen Notbetriebszustand, indem die Leistungsabnahmeeinrichtung von dem Generator elektrisch getrennt wird und sich der Turbinenrotor und der damit verbundene Generatorenrotor frei und im Leerlauf drehen.

Um ein Zurückschalten der Windkraftanlage in den normalen Betriebsmodus automatisch auszulösen, wird eine zweite Regelgröße verwendet, die mit der oben beschriebenen ersten Regelgröße identisch sein kann, aber nicht muss. Die zweite Regelgröße wird vorzugsweise wiederum aus den Signalgrößen Generator-Ausgabespannung, Rotor-Drehzahl und/oder Windgeschwindigkeit gebildet. Erreicht diese zweite Regelgröße einen zweiten, unteren Grenzwert, während sich die Anlage im Notbetriebszustand befindet, so wird davon ausgegangen, dass sich das Windaufkommen normalisiert hat und die Windkraftanlage zurück in ihren regulären Betriebsmodus kehren kann. Dann wird der Generator wieder elektrisch an die Leistungsabnahmeeinrichtung angeschlossen, so dass die Energiegewinnung wiederhergestellt ist. Optional kann vor dem Umschalten in den Normalbetriebszustand noch zusätzlich der Generator elektrisch kurzgeschlossen und dann die Generatorkurzschlussspannung und/oder der Generatorkurzschlussstrom gemessen werden; das Umschalten in den Normalbetriebszustand soll dann erst bei Einhaltung eines bestimmten Sollwertbereichs für diese Kurzschluss-Messwerte erfolgen.

Als drei wichtige Vorteile der vorliegenden Erfindung ergeben sich daher:
1. Eine sehr einfache Regelung anhand weniger Signalgrößen, die einzeln und/oder in Kombination eingesetzt werden können. Insbesondere lassen sich auch mehrere, aus verschiedenen Signalgrößen gewonnene, Regelgrößen zur redundanten Sicherheitsüberwachung der Steuerung einsetzen, um die Betriebssicherheit der Anlage weiter zu erhöhen
2. Die erfindungsgemäße Sicherheitssteuerung lässt sich mit relativ geringem zusätzlichen Aufwand implementieren. Die zur Gewinnung der Regelgrößen notwendigen Signalgrößen liegen in der Regel bereits vor. Sie brauchen nur messtechnisch erfasst zu werden und können dann leicht in eine externe Anlagensteuerung integriert werden. Bevorzugt erfolgt die Regelung direkt über den mit dem Generator der Windkraftanlage in Verbindung stehenden Wechselrichter bzw. Batterieladeregler.
3. Es verbleiben nur noch sehr kurze Zeiten, in denen die Anlage nicht im Normalbetrieb ist. Das beschriebene Regelungskonzept kann mit sehr hoher Regeldynamik arbeiten, wodurch sich die Leerlaufzeiten und dadurch die Zeiten, in denen die Windkraftanlage nicht im Normalbetrieb ist, minimieren lassen.

Ein Ausführungsbeispiel der Erfindung wird im Folgenden anhand der Zeichnungen näher erläutert. Darin zeigt:
Figur 1 eine perspektivische Ansicht der erfindungsgemäßen Windkraftanlage von schräg oben,
Figur 2 eine Explosionsdarstellung der Windkraftanlage gemäß Figur 1 und
Figur 3 einen Graphen zur Darstellung des erfindungsgemäßen Steuerverfahrens.

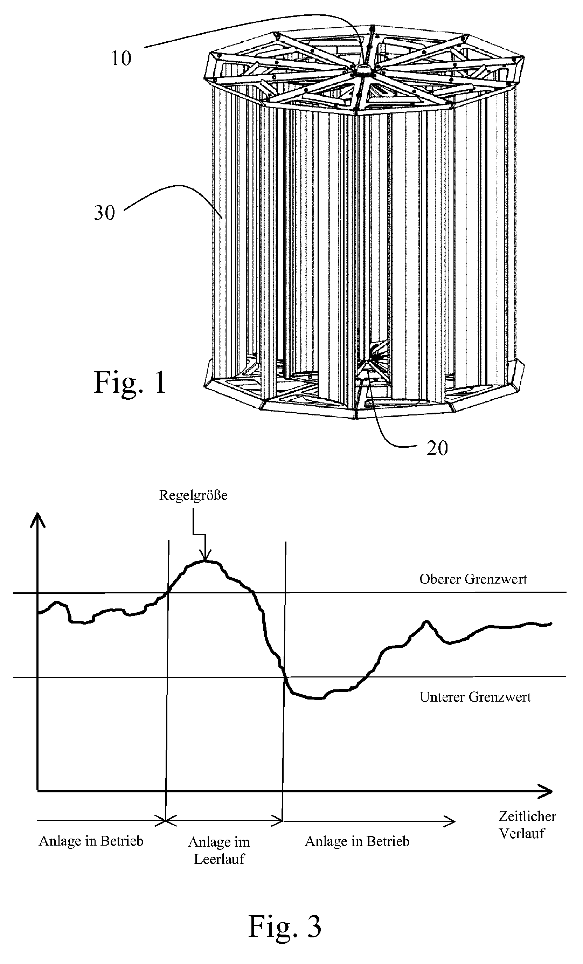

Figur 1 zeigt die Windkraftanlage gemäß dem erfindungsgemäßen Ausführungsbeispiel. Um die vertikal orientierte Drehachse ist der Turbinenrotor 20 drehbar gelagert. Am Außenumfang der Windkraftanlage ist ein fest an einem Generatorgehäuse angebrachter Stator 30 zu sehen. Die Winkraftanlage wird als Kleinanlage im Leistungsbereich von wenigen hundert Watt bis zu mehreren Kilowatt betrieben.

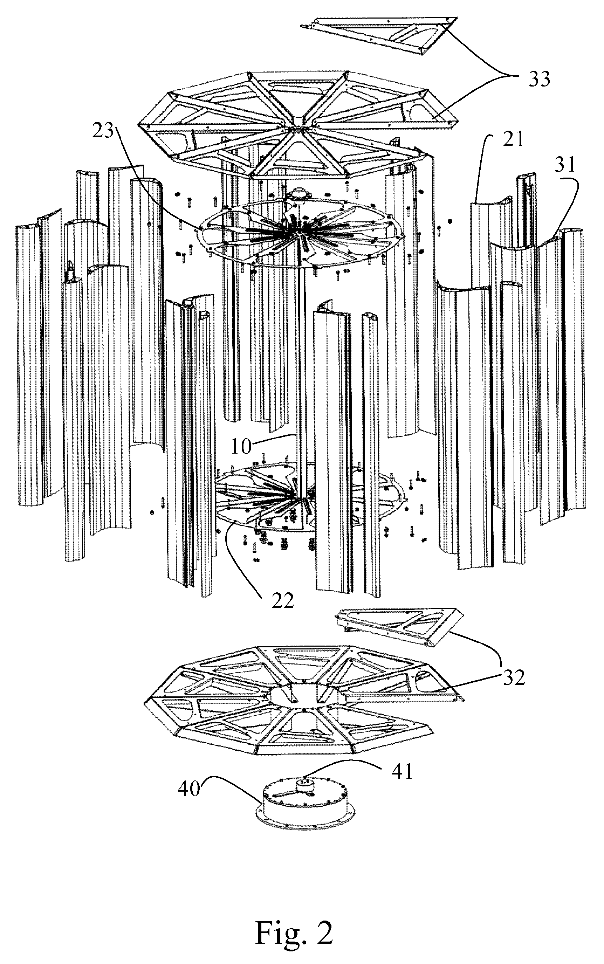

Wie in der Figur 2 genauer dargestellt ist, weist der Stator 30 aus kreissegmentartigen Teilen aufgebaute untere Statorblatthalter 32 auf, die direkt an dem Gehäuse des Generators 40 befestigt sind. Auf den unteren Statorblatthaltern 32 sind jeweils aus mehreren Modulteilen zusammengesteckte Statorblätter 31 befestigt. Die Statorblätter 31 sind an ihrem oberen Ende an oberen Statorblatthaltern 33 befestigt, die ebenso wie die unteren Statorblatthalter 32 in Segmentbauweise zusammengefügt sind.

Innerhalb der Statorblätter 31 ist der Rotor 20 angeordnet, der aus mehreren Rotorflügeln 21 aufgebaut ist, die zwischen einer unteren Stirnplatte 22 und einer oberen Stirnplatte 23 befestigt sind. Der Rotor 20 ist insgesamt drehbar um die vertikale Drehachse 10 gelagert und mit dem zentrisch im Generator 40 liegenden Rotor 41 des Generators 40 verbunden.

Wie in Figur 3 zu sehen ist, wird eine Regelgröße kontinuierlich während des Betriebs der Windkraftanlage erfasst. Die Regelgröße kann dabei direkt gemessen oder aus mehreren gemessenen Signalgrößen berechnet werden. Bevorzugt wird die Steuervorrichtung direkt in der Leistungsabnahmeeinrichtung untergebracht, d.h. bspw. einem Wechselrichter für den Fall der Netzeinspeisung der gewonnenen Energie oder einem Laderegler für den Fall der Einspeisung der gewonnenen Energie in ein Batteriesystem.

Im gezeigten Beispiel ist die verwendete Regelgröße die Ausgabespannung des Generators 40, unabhängig davon, ob sich der Generator 40 im normalen Betriebszustand, d.h. mit Lastabnahme, oder im Leerlaufmodus befindet. Überschreitet die Regelgröße einen vorher festgelegten oberen Grenzwert, so löst die erfindungsgemäße Steuervorrichtung bzw. das erfindungsgemäße Steuerverfahren ein Umschalten der Windkraftanlage in den Notbetriebszustand aus, bei dem sich der Turbinenrotor 20 und der Rotor 41 des Generators 40 im Leerlauf drehen. Erreicht die Regelgröße dann wieder einen unteren Grenzwert, so wird die Anlage zurück in ihren normalen Betriebszustand geschaltet.

Das Umschalten in den Notbetriebszustand und zurück in den Normalbetriebszustand kann jeweils auch mit einer bestimmten, vorher einzeln festlegbaren zeitlichen Verzögerung erfolgen. Im gezeigten Beispiel ist der untere Grenzwert geringer als der obere Grenzwert, so dass sich bei der Steuerung eine bestimmte Hysterese ergibt. Die beiden Grenzwerte können aber auch zusammenfallen, d.h. ein und derselbe Grenzwert verwendet werden. Der obere und untere Grenzwert werden anhand der Leistungsgrenzen der Leistungsabnahmeeinrichtung so gewählt, dass die Windkraftanlage möglichst lange im Normalbetrieb bleiben kann.

Zusammenfassend betrifft die vorliegende Erfindung ein Sicherheitskonzept für Windkraftanlagen mit vertikaler Drehachse 10. Erreicht eine mit der Windgeschwindigkeit korrelierende Regelgröße einen bestimmten oberen Grenzwert, so wird die Anlage in einen Notbetriebszustand geschaltet, bei dem sich der Turbinenrotor 20 und der Rotor 41 des Generators 40 im Leerlauf drehen. Die Anlage ist stabil genug ausgelegt, um auch hohe Windkräfte und daraus resultierende hohe Drehzahlen des frei laufenden Turbinenrotors 20 bzw. Generator-Rotors 41 unbeschadet zu überstehen. Sinkt die Regelgröße wieder unter einen vorgegebenen unteren Grenzwert, so wird die Anlage zurück in den normalen Betriebszustand geschaltet.

## Patentansprüche

1. Windkraftanlage mit
einem drehbar um eine vertikal orientierte Drehachse (10) gelagerten Turbinenrotor (20),
einem Generator (40) zur Gewinnung elektrischer Energie aus der Drehung des Turbinenrotors (20) um die Drehachse (10) und
einer Steuervorrichtung zum Einstellen des Betriebszustands der Windkraftanlage,
**dadurch gekennzeichnet, dass** die Steuervorrichtung dazu ausgelegt ist, abhängig von einer mit der Windgeschwindigkeit korrelierenden Regelgröße automatisch umzuschalten zwischen einem Normalbetriebszustand, bei dem der Generator (40) elektrisch an die zur Energiegewinnung vorgesehene Leistungsabnahmeeinrichtung angeschlossen ist, und einem Notbetriebszustand, bei dem der Generator (40) elektrisch von der Leistungsabnahmeeinrichtung getrennt ist und sich ein Rotor (41) des Generators (40) zusammen mit dem Turbinenrotor (20) im Leerlauf dreht.

2. Windkraftanlage nach Anspruch 1, wobei die Leistungsabnahmeeinrichtung ein Wechselrichter für die Netzeinspeisung der gewonnenen Energie, ein Laderegler für die Einspeisung der gewonnenen Energie in ein Batteriesystem oder ein Gerät zum unmittelbaren Verbrauch der gewonnenen Energie ist.

3. Windkraftanlage nach Anspruch 1 oder 2, wobei die Steuervorrichtung dazu ausgelegt ist, die Windkraftanlage von dem Normalbetriebszustand in den Notbetriebszustand umzuschalten, nachdem die mit der Windgeschwindigkeit korrelierenden Regelgröße als eine erste Regelgröße einen oberen Grenzwert erreicht hat.

4. Windkraftanlage nach Anspruch 3, wobei die Steuervorrichtung dazu ausgelegt ist, von dem Notbetriebszustand wieder in den Normalbetriebszustand zurück zu schalten, nachdem eine zweite Regelgröße einen unteren Grenzwert erreicht hat, der höchstens so groß ist wie der obere Grenzwert.

5. Windkraftanlage nach Anspruch 4, wobei die zweite Regelgröße und die erste Regelgröße identisch sind.

6. Windkraftanlage nach Anspruch 4 oder 5, wobei die Steuervorrichtung dazu ausgelegt ist, vor dem Zurückschalten der Windkraftanlage von dem Notbetriebszustand in den Normalbetriebszustand zunächst den Generator (40) in einen Kurzschlussmodus zu schalten, und den Normalbetriebszustand erst dann wieder herzustellen, wenn eine Messung der Generatorkurzschlussspannung und/oder des Generatorkurzschlussstroms in einem bestimmten Soll-Wertebereich liegt.

7. Windkraftanlage nach einem der Ansprüche 3 bis 6, wobei die erste und/oder die zweite Regelgröße jeweils aus mindestens einer der folgenden Signalgrößen gebildet ist:
der am Generator (40) erzeugten Ausgabespannung,
der Drehzahl des Turbinenrotors (20) und/oder des Generators (40),
der von einem Sensor gemessenen Windgeschwindigkeit.

8. Windkraftanlage nach einem der Ansprüche 3 bis 7, wobei die Steuervorrichtung dazu ausgelegt ist, das Umschalten der Windkraftanlage erst dann auszulösen, wenn seit dem Erreichen des oberen oder des unteren Grenzwerts durch die erste bzw. die zweite Regelgröße zusätzlich eine bestimmte Zeitspanne verstrichen ist.

9. Windkraftanlage nach einem der vorstehenden Ansprüche, mit
dem Turbinenrotor (20), der drehbar um die vertikale Drehachse (10) gelagert ist und mehrere Rotorflügel (21) aufweist, und
einem Turbinenstator (30) mit mehreren feststehenden oder beweglichen Statorblättern (31), die dazu ausgelegt sind, seitlich auf die Windkraftanlage einströmende Luft in Richtung der Rotorflügel (21) zu lenken.

10. Windkraftanlage nach Anspruch 9, die so aufgebaut ist, dass der Turbinenstator (30) ihren Außenumfang bildet und der Turbinenrotor (20) innerhalb des durch die Statorblätter (31) gebildeten Außenumfangs angeordnet ist.

11. Windkraftanlage nach Anspruch 8 oder 9, wobei der Turbinenstator (30) fest am Gehäuse des Generators (40) angebracht ist.

12. Windkraftanlage nach einem der Ansprüche 9 bis 11, wobei die Statorblätter (31) an unteren und/oder oberen Statorblatthaltern (32, 33) befestigt sind, die aus kreissegmentartigen Bauteilen zusammengesetzt sind.

13. Steuerverfahren zum Einstellen des Betriebszustands einer Windkraftanlage mit einem drehbar um eine vertikal orientierte Drehachse (10) rotierbaren Turbinenrotor (20) und einem Generator (40) zur Gewinnung elektrischer Energie aus der Drehung des Turbinenrotors (20) um die Drehachse (10),
**dadurch gekennzeichnet, dass** das Steuerverfahren die Windkraftanlage abhängig von einer mit der Windgeschwindigkeit korrelierenden Regelgröße automatisch umschaltet zwischen einem Normalbetriebszustand, bei dem der Generator (40) an die zur Energiegewinnung vorgesehene Leistungsabnahmeeinrichtung angeschlossen ist, und einem Notbetriebszustand, bei dem der Generator (40) elektrisch von der Leistungsabnahmeeinrichtung getrennt ist und sich ein Rotor (41) des Generators (40) zusammen mit dem Turbinenrotor (20) im Leerlauf dreht.

14. Steuerverfahren nach Anspruch 13, das die Windkraftanlage von dem Normalbetriebszustand in den Notbetriebszustand umschaltet, wenn die mit der Windgeschwindigkeit korrelierenden Regelgröße als eine erste Regelgröße einen oberen Grenzwert erreicht hat.

15. Steuerverfahren nach Anspruch 14, das die Windkraftanlage von dem Notbetriebszustand wieder in den Normalbetriebszustand zurück schaltet, wenn eine zweite Regelgröße einen unteren Grenzwert erreicht hat, der höchstens so groß ist wie der obere Grenzwert, wobei die zweite Regelgröße und die erste Regelgröße vorzugsweise identisch sind.
